(19) Europäisches Patentamt

European Patent Office

Office européen des brevets

(11) Veröffentlichungsnummer: **0 267 529 B1**

(12) **EUROPÄISCHE PATENTSCHRIFT**

(45) Veröffentlichungstag der Patentschrift: **21.10.92**

(51) Int. Cl.⁵: **H04N 5/91**, H04N 9/87

(21) Anmeldenummer: **87116190.7**

(22) Anmeldetag: **04.11.87**

(54) **Video-Wiedergabegerät mit wenigstens einem Video-Kopfverstärker.**

(30) Priorität: **08.11.86 DE 3638146**

(43) Veröffentlichungstag der Anmeldung:
**18.05.88 Patentblatt 88/20**

(45) Bekanntmachung des Hinweises auf die
Patenterteilung:
**21.10.92 Patentblatt 92/43**

(84) Benannte Vertragsstaaten:
**AT BE CH DE ES FR GB IT LI NL SE**

(56) Entgegenhaltungen:
**DE-A- 1 917 205**
**DE-A- 1 938 607**
**DE-A- 3 221 858**
**DE-A- 3 223 846**
**US-A- 4 240 038**

**FUNKSCHAU, 1972, Heft 19, Seiten 701-702;**
**W. SCHULZ: "Die neuen VCR-Geräte"**

(73) Patentinhaber: **Nokia (Deutschland) GmbH**
**Östliche Karl-Friedrich-Strasse 132**
**W-7530 Pforzheim(DE)**

(72) Erfinder: **Reime, Gerd**
**Kelterstrasse 39a**
**W-7131 Wurmberg(DE)**

Rank Xerox (UK) Business Services

**Beschreibung**

Die Erfindung bezieht sich auf ein Video-Wiedergabegerät nach dem Oberbegriff des Anspruches 1.

Video-Wiedergabegeräte, insbesondere Videobandgeräte, mit einem magnetisierbaren Informationsträger, beispielsweise einem Videomagnetband, enthalten wenigstens einen Videokopf zur Abtastung der auf dem magnetisierbaren Informationsträger gespeicherten Videosignale und zur Ausgabe dieser Videosignale in der Gestalt von elektrischen Signalen. Zur Umsetzung des abgetasteten magnetischen Feldes der auf dem Informationsträger gespeicherten Videosignale in elektrische Signale enthält der Video-Wiedergabekopf eine Spule, an die ein Kopfverstärker angeschlossen ist. Eine derartige Anordnung ist beispielsweise aus der Zeitschrift Funkschau 1984, Heft 15, Seiten 42 bis 45, insbesondere Seite 44 bekannt. Der Video-Kopfverstärker ist dazu vorgesehen, den geringen Spannungspegel der Video-Wiedergabeköpfe auf einen für die nachfolgende Schaltung ausreichenden Pegel zu verstärken. Dafür sind an den Video-Kopfverstärker hohe Anforderungen bezüglich der Verstärkung, der Bandbreite und des Eigenrauschens gestellt. Der Frequenzbereich des bekannten Video-Kopfverstärkers beträgt 0,1 bis 6 MHz.

Zur Verbesserung des Rauschverhaltens enthält ein aus der Zeitschrift Funkschau 1972, Heft 19, Seiten 701 und 702 bekannter Video-Kopfverstärker einen rauscharmen Feldeffekttransistor. Außerdem arbeitet dieser bekannte Video-Kopfverstärker zur Verringerung seines Rauschanteils mit einer Resonanzüberhöhung etwa in der Mitte des die Leuchtdichte wiedergebenden Frequenzbandes.

Das Leuchtdichtesignal (Luminanzsignal) wird auf dem magnetisierbaren Träger als ein frequenzmoduliertes Signal innerhalb eines vorgegebenen Frequenzbandes dargestellt. Die obere Grenzfrequenz dieses Frequenzbandes entspricht dem Weißpegel des gespeicherten Videosignals. Im unteren Bereich dieses Frequenzbandes liegt die Frequenz $f_S$ für den Pegel der Schwarzschulter des Videosignales. Wegen der erforderlichen hohen Verstärkung des Video-Kopfverstärkers erzeugt der Video-Kopfverstärker an seinem Ausgang zusätzlich zu dem verstärkten Nutzsignal einen verhältnismäßig hohen Rauschanteil, der mit zunehmender Übertragungsfrequenz zunimmt. Damit sind vor allem die hellen Anteile eines übertragenen Videobildes vom Rauschen betroffen, das sich als grießeliges Flimmern in diesen Bildteilen bemerkbar macht. Deshalb werden in bekannten Video-Wiedergabegeräten dem Video-Kopfverstärker weitere Entzerrerschaltungen nachgeschaltet (siehe z.B. DE-OS 19 17 205). Diese Entzerrerschaltungen haben jedoch den Nachteil, daß sie vor allem die Bildschärfe mit zunehmender Rauschentzerrung verringern.

Zur Unterdrückung eines Impedanzrauschens eines Videokopfes und zur Rauschanpassung zwischen einem Videokopf und einem nachgeschalteten Kopfverstärker ist es aus der DE-PS 32 21 858 bekannt, dem Ausgang des Drehwandlers eines Videokopfes einen Kondensator parallel zu schalten und den dadurch gebildeten Resonanzkreis so abzustimmen, daß eine Resonanzfrequenz in der Nähe der maximalen Trägerfrequenz des wiedergegebenen FM-Signals liegt. Diese Maßnahmen betreffen jedoch nur das Rauschen am Eingang des Videokopfverstärkers.

Der Erfindung liegt die Aufgabe zugrunde, zusätzliche Maßnahmen zur Rauschverminderung am Videokopfverstärker selbst vorzusehen. Diese Aufgabe wird nach der Erfindung durch die im Kennzeichen des Anspruches 1 angegebenen Merkmale gelöst.

Die in der Erfindung angegebenen Mittel zur Verminderung des Rauschens setzen vor dem Eingang oder höchstens unmittelbar nach dem Eingang des Video-Kopfverstärkers an, so daß der Video-Kopfverstärker im Frequenzbereich mit zunehmenden Rauschanteilen eine wesentlich geringere Verstärkung aufbringen muß und damit auch in diesen Frequenzbereichen wesentlich geringere Rauschanteile als bisher üblich erzeugt. Die Verminderung des Rauschanteils in diesem Frequenzbereich kann so groß bemessen werden, daß in den übertragenen hellen Bildanteilen das Rauschen nicht mehr störend auftritt. Da kaum noch durch die erfindungsgemäßen Maßnahmen Entzerrungsmaßnahmen nach dem Ausgang des Video-Kopfverstärkers notwendig sind, bewirken die erfindungsgemäßen Maßnahmen eine wesentliche Verbesserung der Bildschärfe des dargestellten Videobildes und eine Verringerung des Schaltungsaufwandes in der Signalstrecke des Videosignals.

Der Unteranspruch gibt eine besonders vorteilhafte Ausgestaltung der Erfindung für die Einstellung eines erforderlichen Frequenzganges des Video-Kopfverstärkers bei zusätzlicher weiterer Verringerung des in den Video-Kopfverstärker erzeugten Rauschanteiles.

Die Erfindung wird nachfolgend anhand eines vorteilhaften Ausführungsbeispieles näher erläutert. In der zugehörigen Zeichnung zeigen

Fig. 1 einen Video-Kopfverstärker mit einem Videokopf in einer schematischen Schaltungsdarstellung,

Fig. 2a ein Frequenzdiagramm der auf einem magnetisierbaren Informationsträger gespeicherten Videosignale,

Fig. 2b ein dem Frequenzdiagramm von Fig. 2a zugeordnetes Zeitdiagramm eines Videosignals,

Fig. 3 ein Diagramm der Frequenzgänge zu der in Fig. 1 dargestellten Schaltung.

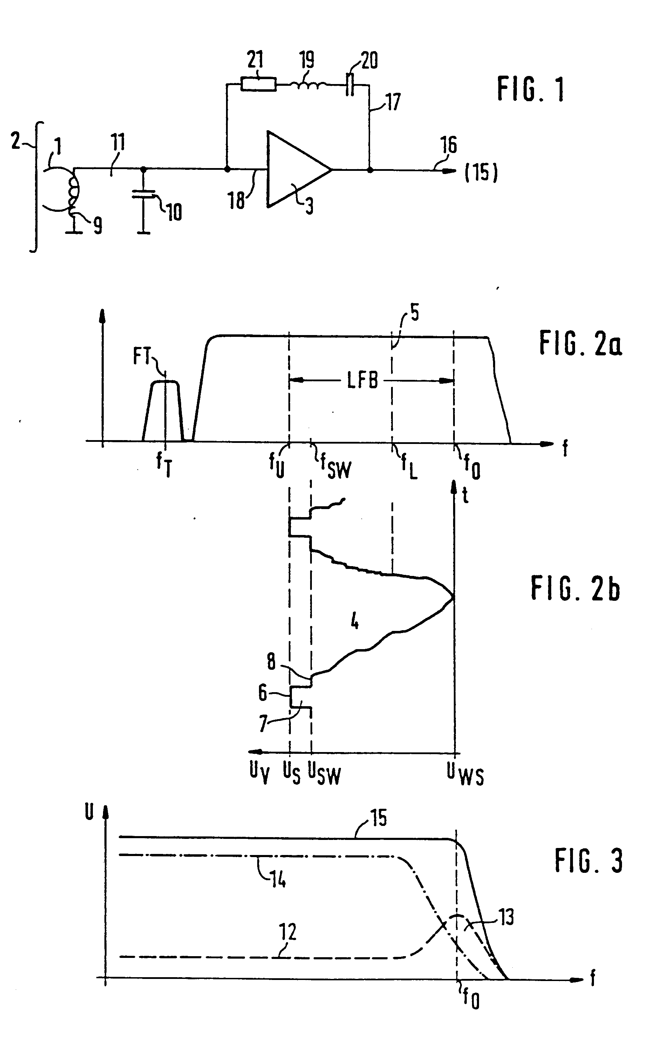

In Fig. 1 ist von einem Video-Wiedergabegerät schematisch ein Video-Wiedergabekopf 1 dargestellt, der einen magnetisierbaren Informationsträger 2 abtastet und dem ein Video-Kopfverstärker 3 nachgeschaltet ist. Auf dem magnetisierbaren Informationsträger 2 sind Videosignale 4 gespeichert, von denen eines schematisch in dem Zeitdiagramm der Fig. 2b dargestellt ist. Die Farbe eines Videosignales 4 ist als Amplitude eines Farbträgers FT mit der Farbträgerfrequenz $f_T$ auf dem Informationsträger 2 gespeichert. Die Leuchtdichte des Videosignales 4 ist als ein Signal 5 einer bestimmten Frequenz $f_F$ innerhalb eines vorgegebenen Frequenzbandes LFB auf dem Informationsträger 2 gespeichert. Das Frequenzschema der auf dem magnetisierbaren Informationsträger 2 gespeicherten Signale S ist in Fig. 2a in einem Frequenzdiagramm schematisch dargestellt. Das die Leuchtdichte darstellende Frequenzband LFB ist von einer vorbestimmten unteren Grenzfrequenz $f_u$ und von einer vorbestimmten oberen Grenzfrequenz $f_o$ begrenzt. Die untere Grenzfrequenz $f_u$ entspricht dem Spannungspegel $U_S$ des Daches 6 des Synchronimpulses 7 des Fernsehsignales 4. Dem Pegel $U_{SW}$ der Schwarzschulter 8 des in Fig. 2b dargestellten Videosignales 4 entspricht eine der Schwarzschulter zugeordnete Frequenz $f_{SW}$ innerhalb des in Fig. 2a dargestellten Frequenzbandes LFB. Dem oberen Grenzwert $f_o$ dieses Frequenzbandes LFB entspricht der Weißpegel $U_{WS}$ des in Fig. 2b dargestellten Videosignales 4.

Der Spule 9 des Video-Wiedergabekopfes 1 ist ein Kondensator 10 parallel geschaltet, der so bemessen ist, daß der aus der Spule 9 und dem Kondensator 10 gebildete Schwingkreis 11 bei der oberen Grenzfrequenz $f_o$ eine Resonanz bildet. Dadurch wird der in der Fig. 3 mit der Kurve 12 schematisch dargestellte Frequenzgang des Video-Wiedergabekopfes 1 in der Umgebung der oberen Grenzfrequenz $f_o$ des die Leuchtdichte wiedergebenden Frequenzbandes LFB durch eine Resonanzüberhöhung 13 erheblich angehoben, so daß in diesem Bereich der nachgeschaltete Video-Kopfverstärker 3 eine wesentlich geringere Verstärkung aufbringen muß. Der Frequenzgang des Video-Kopfverstärkers 3, der in der Fig. 3 durch die Kurve 14 dargestellt ist, ist im Bereich der oberen Grenzfrequenz $f_o$ des die Leuchtdichte wiedergebenden Frequenzbandes LFB so bemessen und auf die Resonanzüberhöhung 13 des Frequenzganges des Video-Wiedergabekopfes abgestimmt, daß der durch die Kurve 15 in Fig. 3 schematisch dargestellte resultierende Frequenzgang des Eingangssignales S des Video-Wiedergabekopfes 1 am Ausgang des Video-Kopfverstärkers 3 bis zur oberen Grenzfrequenz $f_o$ des Frequenzbandes LFB linear verläuft.

Die Absenkung des Frequenzganges 14 im Bereich der oberen Grenzfrequenz $f_o$ des Frequenzbandes LFB bedeutet, daß der Video-Kopfverstärker 3 in diesem Frequenzbereich eine geringere Verstärkung aufweisen muß und dadurch in diesem Frequenzbereich, in dem er bei linearem Frequenzgang einen höheren Rauschanteil erzeugt als bei tieferen Frequenzen, wegen der geringeren Verstärkung einen geringeren Rauschanteil erzeugt. Die Absenkung des Frequenzganges 14 im Bereich der oberen Grenzfrequenz $f_o$ des die Leuchtdichte wiedergebenden Frequenzbandes LFB wird im dargestellten Ausführungsbeispiel durch einen frequenzabhängigen Gegenkopplungszweig 17 vom Ausgang 16 des Video-Kopfverstärkers zu dessen Signaleingang 18 erreicht. Der Gegenkopplungszweig besteht im dargestellten Ausführungsbeispiel aus der Serienschaltung einer Induktivität 19, einer Kapazität 20 und einem ohmschen Widerstand 21. Mittels dieses Gegenkopplungszweiges 17 wird nicht nur die gewünschte Absenkung des Frequenzganges 14 im Bereich der oberen Grenzfrequenz $f_o$ des Frequenzbandes LFB durch eine entsprechende Bemessung des Gegenkopplungszweiges 17 erreicht, sondern auch noch eine zusätzliche Dämpfung der im Video-Kopfverstärker 3 erzeugten Rauschanteile.

## Patentansprüche

1. Video-Wiedergabegerät mit wenigstens einem Video-Wiedergabekopf (1) zur Abtastung auf einem magnetisierbaren Informationsträger (2) gespeicherter Videosignale (4), deren Leuchtdichte durch einen Frequenzwert innerhalb eines vorgegebenen Frequenzbandes (LFB) wiedergegeben wird, und mit einem Resonanzkreis (11), dessen induktiver Bestandteil der Video-Wiedergabekopf ist und der auf die obere Grenzfrequenz ($f_o$) des die Leuchtdichte wiedergebenden Frequenzbandes abgestimmt ist, sowie mit einem dem Resonanzkreis nachgeschalteten Videokopfverstärker (3), **dadurch gekennzeichnet,** daß der Frequenzgang (14) des Ausgangspegels des Kopfverstärkers (3) im Bereich der oberen Grenzfrequenz ($f_o$) des Frequenzbandes so fallend bemessen ist, daß der aus dem Frequenzgang (12) des Ausgangspegels des den Video-Wiedergabekopf enthaltenden Schwingkreises und aus dem Frequenzgang (14) des Videokopfverstärkers resultierende Frequenzgang (15) bis zur oberen Grenzfrequenz des die Leuchtdichte wiedergebenden Frequenzbandes etwa linear ist.

2. Video-Wiedergabegerät nach Anspruch 1, dadurch gekennzeichnet, daß der Video-Kopfverstärker (3) einen in die Eingangsstufe des Video-Kopfverstärkers mündenden frequenzabhängigen Gegenkopplungszweig (17) enthält.

## Claims

1. Video player comprising at least one video playback head (1) for sensing video signals (4) which are stored on a magnetizable medium (2) and whose luminance information is represented by a frequency value within a predetermined frequency band (LFB), and a video-head amplifier (3), **characterized in** that the video playback head (1) is part of a resonant circuit (11) tuned to the upper cutoff frequency ($f_o$) of the luminance-information-containing frequency band (LFB),and that in the region of the upper cutoff frequency ($f_o$), the frequency response (14) of the video-head amplifier (3) is made to fall off in such a way that the frequency response (15) resulting from the frequency response (12) of the resonant circuit containing the video playback head and the frequency response (14) of the video-head amplifier is approximately linear up to the upper cutoff frequency of the luminance-information-containing frequency band.

2. A video player as claimed in claim 1, characterized that the video-head amplifier (3) is provided with a frequency-dependent feedback path (17) ending in its input stage.

## Revendications

1. Appareil de reproduction vidéo avec au moins une tête de lecture vidéo (1) pour la lecture de signaux vidéo (4) mémorisés sur un véhicule d'informations (2) magnétisable, dont la luminance est reproduite par une valeur de fréquence à l'intérieur d'une bande de fréquences déterminée (LFB) et syntonisée avec un circuit résonnant (11), dont le composant inductif est la tête de lecture, et sur la limite de fréquence supérieur (fo) de la bande de fréquences reproduisant la luminance, ainsi qu'avec un amplificateur de tête vidéo (3) monté en aval du circuit résonnant, **caractérisé en ce que** la réponse en fréquences (14) du niveau de sortie de l'amplificateur de tête (3) est dimensionnée, dans la gamme de la fréquence limite supérieure (fo) de la bande de fréquences de façon décroissante, de telle sorte que la réponse en fréquences (15) résultant de la réponse en fréquences (12) du niveau de sortie du circuit d'oscillation comprenant la tête de lecture vidéo et de la réponse en fréquence (14) résultant de l'amplificateur de tête vidéo est, jusqu'à la fréquence limite supérieure, environ linéaire à la bande de fréquences reproduisant la luminance.

2. Appareil de reproduction vidéo selon la revendication 1, caractérisé en ce que l'amplificateur de tête vidéo (3) contient un circuit de contreréaction (17) pour courant continu et alternatif débouchant dans l'étage d'entrée de l'amplificateur de tête vidéo.

FIG. 1

FIG. 2a

FIG. 2b

FIG. 3

5